# EUROPEAN PATENT APPLICATION

(11) **EP 1 879 002 A1**
(43) Date of publication of application: **16.01.2008**
(21) Application number: 06014690.9
(22) Date of filing: 14.07.2006
(51) Int. Cl.: G01C 21/36

(54) **GPS system for receiving and processing GPS signal and traffic information signal**

(71) Applicant: Globalsat Technology Corporation, Chung Ho City T'ai pei Hsien (TW)
(72) Inventor: Chen, Wei-Liang, Chung Ho City, Taipei Hsien (TW); Ting, Shih-Chieh, Chung Ho City, Taipei Hsien (TW)
(74) Representative: Glawe, Delfs, Moll

(57) **Abstract**

A GPS system comprising a GPS receiver for receiving and processing a GPS signal, a traffic information receiver is adopted for receiving traffic information signal and a storage device for storing the GPS signal and the traffic information signal is provided. The traffic information receiver is adopted for receiving traffic information signal. The GPS receiver comprises a wireless receiver and a processor. The wireless receiver is adopted for receiving the GPS signal. The processor is adopted for controlling the wireless receiver and rotationally storing the GPS signal and the traffic information signal at a certain time period, and then transmitting the stored GPS signal and traffic information signal in order to the storage device, wherein the information corresponding to the GPS signal and the traffic information signal are transmitted according to a specific time or frequency setup by the processor.

## Description

### BACKGOUND OF THE INVENTION

### 1. Field of the invention

The present invention generally relates to a system for receiving and processing a GPS signal and a traffic information signal, and more particularly to a GPS system for receiving and processing a GPS signal and a traffic information signal, wherein a processor of a GPS receiver rotationally stores the GPS signal and the traffic information signal into buffer and then transmits the stored signals to a storage device in good order for displaying.

### 2. Description of the related art

Presently, a traffic condition has improved significantly to provide more convenience and quality to our every day activities. Accordingly, a concept of global village is created. For saving energy, precious time and upgrading efficiency, a system to accurately locate a person or object in a large range and to communicate thereby without any limit of time and location is very essential. Accordingly, a global positioning system (GPS) has been developed to accurately provide the information of the latitude and the longitude to enable the users all around the world know their exact location.

Furthermore, there are two major purposes of the GPS system. The first purpose is to locate, retrieve exact location information by referring to the location information transmitted by the satellite, and the second purpose is to synchronize signal in the internet. Because the satellite provides a time signal, and if the world wide internet system can receive this time signal, the internet system will have a stable resource for the synchronized signal, and most of the devices may be gradually designed to rely on this simple and stable method for receiving the synchronized signal.

Generally, a GPS receiver receives signals from a plurality of satellites corresponding to the positions, and the time signal can be chosen from a signal with the best quality. The GPS system is mostly used in the transportation means. GPS receiver is installed in a car, airplane or a ship to receive the satellite signal to enable the user to learn the exact location and various services, for example, navigation, SOS, road rescue, security and so on.

As the semiconductor technology is well developed, the overall cost may be reduced. Thus, the car GPS is widely used, and the use of GPS system in the car has become the major purpose of the GPS system. Commonly, the user uses the GPS system with the car LCD display or the PDA for retrieving map signal and navigation status information.

Furthermore, the FM radio message system is another appliance of the traffic message channel (TMC), which broadcast the traffic and weather information in order to guide the user to take a proper route to arrive at the destination. The traffic information is being updated on real time basis, for example accident, traffic and other information, so that the user may choose the best route to arrive at the destination. Therefore, the TMC provides the traffic information on real time basis to the users on the road and the TMC is different from the roadside traffic news bulletin board.

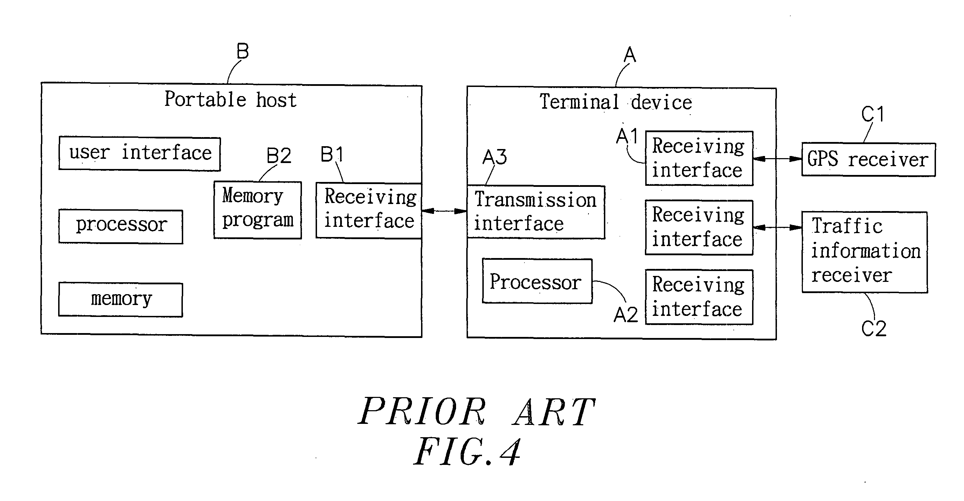

When using the TMC and the GPS receiver in the car navigation, the TMC receives the real time traffic information and transmits the GPS signal and traffic signals to LCD display, PDA or car navigator where it is displayed. Referring to Fig. **4,** the conventional terminal device **A** comprises a receiving interface **A1** to receive signals from a GPS receiver **C1** and a traffic information receiver **C2.** When the receiving interface **A1** simultaneously receives GPS and traffic signals, a processor **A2** in the terminal device **A** encodes the GPS and traffic signals and then wraps it into a packet as a signal set which is then transmitted to a receiving interface **B1** of a portable host **B** through a transmission interface **A3** of the terminal device **A.** Next, a memory program **B2** in the portable host **B** decodes and restores the signal set into the GPS signal and traffic information so that the portable host **B** displays the map represented by the GPS signal and traffic information. Even though the conventional art provides the GPS signal and the traffic information signal to the portable host **B,** but there are still some defects, which are described as follows.
1. The conventional terminal device **A** simultaneously receives the signals transmitted by the GPS receiver **C1** and the traffic information receiver **C2,** which is then encoded into a packet for converting signals into a signal set and then transmitted to the portable host **B** where it is decoded. Because, the GPS signal and traffic information signal are both are continuously simultaneously transmitted, thus often packaging and decoding processes occupies the memory capacity and the system resource of the terminal device **A** and the portable device **B,** and therefore the overall transmission quality is adversely affected.
2. When the terminal device **A** simultaneously receives the GPS signal and traffic information signal, interference between the GPS signal and the traffic signal may easily occurs and cause instability in signal transmission, or the information may be overwritten and become invalid.

Therefore, how to overcome the above defects is an important issue for the manufacturers in the field.

### SUMMARY OF THE INVENTION

According to the aspect of the present invention, the GPS system comprises a GPS receiver having a processor for rotationally storing a GPS signal and a traffic information signal into buffer temporally and then transmitting in order to a storage device. The GPS signal and the traffic information signal are stored in a buffer of the processor, and no extra controlling and calculating elements by encoding and decoding process is required. The information corresponding to the GPS signal and the traffic information signal may be displayed by the storage device. Because the GPS signal and the traffic information signal are transmitted in order and therefore the interference between the GPS signal and the traffic information signal may be avoided, and the GPS signal and the traffic information signal are stored in the buffer of the processor of the GPS receiver and therefore no memory capacity in the GPS receiver or the storage device are occupied. Thus, the overall transmission quality may be effectively promoted.

According to another aspect of the present invention, the processor of the GPS receiver rotationally processes the GPS signal and the traffic information signal then temporally stores them in the buffer. Thus, the GPS signal and the traffic information signal may not interfere with each other rendering the signal transmission more stable. Furthermore, the possibility of the information being overwritten and being invalid may also be avoided.

According to another aspect of the present invention, the processor of the GPS receiver alternatively stores the GPS signal and the traffic information signal into buffer, and the whole signal may be transmitted in order to the storage device for displaying. The traffic information receiver can be an external device or a built-in device in the GPS receiver. Thus, the application of the GSP system of the present invention can be wider.

### BRIEF DESCRIPTION OF THE DRAWING

Fig. **1** is a block diagram of a GPS system according to an embodiment of the present invention.
Fig. **2** is a diagram illustrating a process of receiving the GPS signal and the traffic information signal according to an embodiment of the present invention.
Fig. **3** is a block diagram of a GPS system according to another embodiment of the present invention.
Fig. **4** is a block diagram of a conventional GPS system.

### DETAIL DESCRIPTION OF THE INVENTION

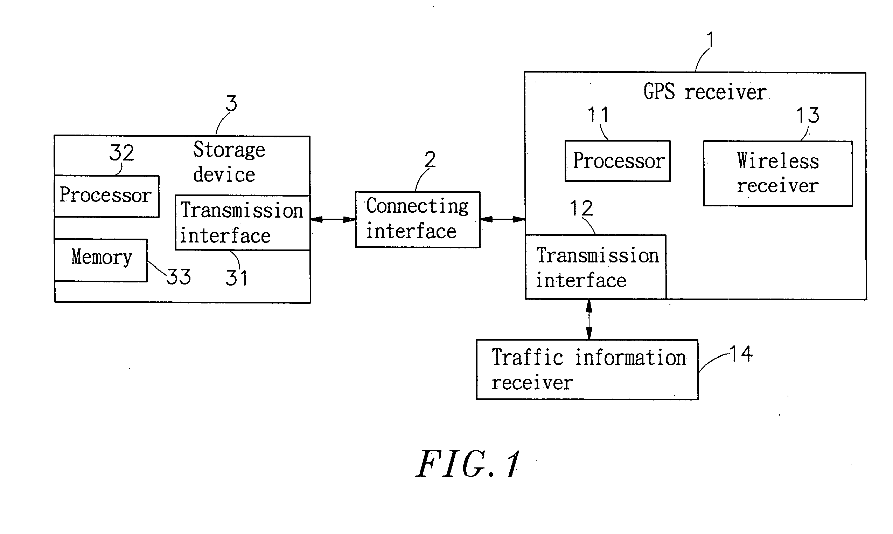

Referring to Fig. **1,** a GPS system of the present invention comprises a GPS receiver **1,** a connecting interface **2** and a storage device **3.** The GPS receiver **1** is connected to the storage device **3** via the connecting interface **2.** The GPS receiver **1** comprises a processor **11,** a transmission interface **12** and a wireless receiver **13.** The processor **11** is electrically connected to the transmission interface **12** so that the processor **11** can receive traffic information signal transmitted from a traffic information receiver **14** via the transmission interface **12.** The traffic information receiver **14** may be a digital audio broadcasting (DAB), a general packet radio service (GPRS) or any other receiver having the equivalent function. The GPS receiver **1** is electrically connected to a transmission interface **31** of the storage device **3** through the connection interface **2.** The connection interface **2** may be an IEEE1394, a USB, a SATA, an IDE, a RS232, a SCSI, a serial port, a parallel port or any other wired transmission interface and an antenna, a radio, an infrared ray, a Bluetooth or any other wireless transmission interface capable of connecting the GPS receiver **1** with the storage device **3** for facilitating signal transmission. The storage device **3** further comprises a processor **32** and a memory **33,** and may be capable of processing the signal for displaying.

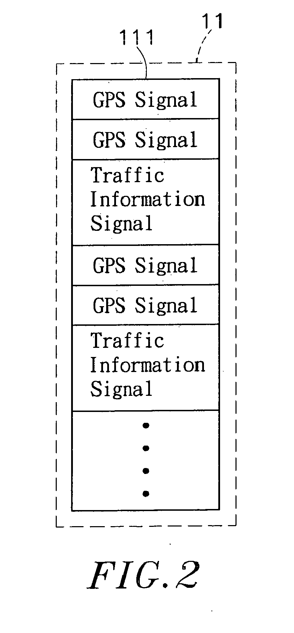

Referring to Fig. **1** and **2,** the processor **11** of the GPS receiver **1** alternatively processes GPS signals and traffic information signals. The processor **11** stores the GPS signal into a buffer **111** temporarily, a firmware program in the processor **11** is set within a best time, and the processor **11** stores the traffic information signal into the buffer **111** temporarily. Thus, after the storage of the traffic information signal, the processor **11** continues to store the GPS signal. By using the setup of the firmware program in the processor **11,** the GPS signal and the traffic information signal can be alternatively transmitted to the GPS receiver 1.

Therefore, the GPS signals and the traffic information signals stored in the buffer **111** may be further transmitted in order to the storage device **3** for displaying according to a specific time or frequency setup by the processor **11.** Thus, the processor **11** of the GPS receiver **1** alternatively controls the GPS signals and the traffic information signals stored in the buffer **111,** which is then transmitted to the storage device **3,** wherein a application software in the storage device **3** directly identifies file headers of the GPS signals and the traffic information signals and uses for displaying the GPS navigation information and playing audio traffic information.

Furthermore, according to an embodiment of the present invention, the traffic information signal is a data stream and the size of each data package is fixed, and therefore the processor **11** can identify the file header of the data packet to complete the receipt of the data.

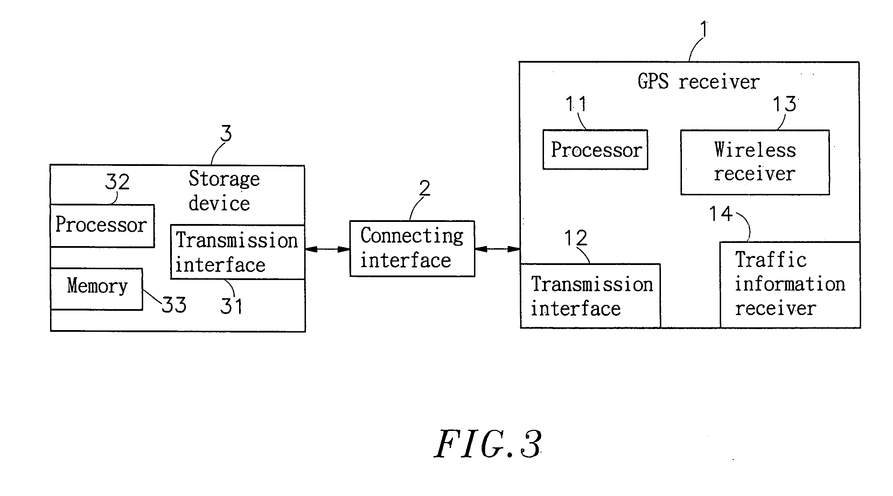

Fig. **3** shows an alternate form of the GPS receiver **1.** This alternate form is substantially similar to the GPS receiver **1** shown in Fig. **1** with the exception of the traffic information receiver **14.** The traffic information receiver **14** can be a built-in device in the GPS receiver **1.** The storage device **3** may be a PDA, a portable telephone, a portable computer or a host equipped with a monitor and a speaker. The storage device **3** can notify a user about the traffic status and the immediate traffic information. It should be noted that any modification of the above concept of the present invention should be construed within the scope of the present invention.

Accordingly, the GPS receiver 1 of the present invention has at least the following advantages.
1. The processor **11** of the GPS receiver **1** is adopted for alternatively controlling and storing the GPS signals and the traffic information signals in the buffer **111** and do not require any extra controlling or calculating elements. Furthermore, unlike the conventional art, it is not necessary to encode and package the GPS signals and the traffic information signals into a signal set by the processor **11,** and then transmitted to the storage device **3** for decoding. Thus, the encoding and decoding procedures of the conventional art may be effectively avoided. Thus, the memory capacity of the GPS receiver **1** and the storage device **3** may not be occupied, and the overall transmission quality may be effectively promoted.
2. Because the processor **11** of the GPS receiver **1** is adopted for alternatively controlling and storing the GPS signals and the traffic information signals in the buffer **111,** and therefore, the possibility of interference between the GPS signals and the traffic information signals may be effectively avoided and thereby promote the stability of signal transmission, or the possibility of the information being overwritten and being invalid may also be avoided.
3. The most important feature of the present invention is that the GPS receiver **1** alternatively processes the GPS signals and the traffic information signals and completely transmits the signals in order to the storage device **3.** The traffic information receiver **14** may be an external device or a built-in device in the GPS receiver **1.**

While the invention has been described in conjunction with a specific best mode, it is to be understood that many alternatives, modifications, and variations will be apparent to those skilled in the art in light of the foregoing description. Accordingly, it is intended to embrace all such alternatives, modifications, and variations in which fall within the spirit and scope of the included claims. All matters set forth herein or shown in the accompanying drawings are to be interpreted in an illustrative and non-limiting sense.

### List of reference numbers

- 1.: GPS receiver
- 11.: Processor
- 111.: Buffer
- 12.: Transmission interface

- 2.: Connecting interface

- 3.: Storage device
- 31.: Transmission interface
- 32.: Processor

- A.: Terminal device
- A1.: Receiving interface
- A2.: Processor

- B.: Portable host
- B1,: Receiving interface

- C1.: GPS receiver
- C2.: Traffic information receiver

- 13.: Wireless receiver
- 14.: Traffic information receiver

- 33.: Memory

- A3.: Transmission interface

- B2.: Memory program

## Claims

1. A GPS system, for receiving a GPS signal and a traffic information signal, comprising:
a storage device;
a traffic information receiver for receiving traffic information signal; and
a GPS receiver, comprising:
a wireless receiver, for receiving said GPS signal; and
a processor, rotationally storing said GPS signal and said traffic information signal at a certain time period into buffer , and transmitting said stored GPS signal and said stored traffic information signal in order to said storage device, wherein said GPS signal and said traffic information signal are stored in a buffer and then transmitted in order to said storage device for displaying according to a specific time or frequency setup by said processor.

2. The GPS system according to claim 1, wherein said GPS receiver further comprises a transmission interface connected to said processor for receiving signals from a traffic information receiver.

3. The GPS system according to claim 1, wherein said traffic information receiver can be a built-in device in said GPS receiver.

4. The GPS system according to claim 1, wherein said traffic information receiver can be a digital audio broadcasting (DAB), a general packet radio service (GPRS) or any other receiver having the equivalent function.

5. The GPS system according to claim 1, wherein said GPS receiver is connected to a transmission interface of said storage device through a connecting interface for transmitting said GPS signal or said traffic information signal received by said GPS receiver to said storage device.

6. The GPS system according to claim 5, wherein said connecting interface can be an IEEE1394, a USB, a SATA, an IDE, a RS232, a SCSI, a serial port, a parallel port or any other wired transmission interface.

7. The GPS system according to claim 5, wherein said connecting interface can be an antenna, a radio, an infra ray, a Bluetooth or any other wireless transmission interface.

8. The GPS system according to claim 1, wherein said storage device comprises a processor, a memory and an application software, wherein said application software is adopted for identifying a file header of said GPS signal or said traffic information signal for displaying corresponding information.

9. The GPS system according to claim 1, wherein said processor of said GPS receiver rotationally stores said GPS signal and said traffic information signal into said buffer, and wherein said processor transmits said GPS signal and said traffic information signal in order according to a specific time or frequency setup by said processor to store in said storage device.

10. The GPS system according to claim 1, wherein said storage device can be a PDA, a portable telephone, a portable computer or a device equipped with a monitor and a speaker.
